# EUROPEAN PATENT APPLICATION

(11) **EP 4 203 265 A1**
(43) Date of publication of application: **28.06.2023**
(21) Application number: 21217178.9
(22) Date of filing: 22.12.2021
(51) Int. Cl.: H02K 3/51, H02K 15/16

(54) **A ROTOR FOR A ROTARY ELECTRIC MACHINE**

(71) Applicant: Valeo eAutomotive Germany GmbH, 91056 Erlangen (DE)
(72) Inventor: Schlereth, Alexander, 97616 c/o VSeA, Siemenstr. 14, Bad Neustadt a.d.Saale (DE); Wolf, Nico, 97616 c/o VSeA, Siemenstr. 14, Bad Neustadt a.d.Saale (DE); Wieczorek, Christoph, 97616 c/o VSeA, Siemenstr. 14, Bad Neustadt a.d.Saale (DE); Siepker, Carsten, 97616 c/o VSeA, Siemenstr. 14, Bad Neustadt a.d.Saale (DE)
(74) Representative: Valeo Powertrain Systems

(57) **Abstract**

The invention concerns a rotor (3) for a rotary electric machine, the rotor (3) having an axis of rotation and comprising:
- a rotor shaft (5) extending parallel to the axis of rotation;
- a rotor body (7) mounted on the rotor shaft (5) and having a plurality of teeth (11) protruding radially;
- at least one field coil wound around the plurality of teeth, said field coil forming coil ends at axial ends of the teeth;
- at least one cover (15) mounted on the rotor shaft and configured to cover the coil ends;
characterized in said cover comprises a plurality of holes (22, 26, 27) configured to each receive a solid balancing element (21) which provides an additional mass to the rotor in order to balance said rotor (3).

## Description

### FIELD OF THE INVENTION

The present invention belongs in particular to the field of rotary electric machines configured to be on board of an automotive vehicle, such as an electric vehicle or a hybrid vehicle. The vehicle can be of any type, such as a land, air or sea vehicle.

The present invention relates in particular to a rotor for a rotary electric machine.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, such as the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth.

A conventional solution for mounting the rotor body of the rotor shaft relies on having an outer circumference of the rotor shaft slightly higher than an inner circumference of the rotor body. Then, the rotor body is mounted on the rotor shaft by press-fitting.

A cover is provided to protect the field coil at its axial ends, said cover being mounted on the rotor shaft.

In general, each component of a rotor has a deviation with regards to the shape, the dimensions and the symmetry. Due to the assembly of more than two components together to build up a rotor, the rotor will be a non-symmetric part with regards to rotation, which results in an eccentrically center of gravity that leads to an imbalance when the rotor will be rotated. An imbalance is exciting an additional radial force (which increases with increasing rotational speed), and leads in most cases to undesirable vibrations of the machine with said imbalance of the rotor.

In this context, an objective of the present invention is to provide an improved balanced rotor.

### SUMMARY OF THE INVENTION

The present invention concerns a rotor for a rotary electric machine, the rotor having an axis of rotation and comprising:
- a rotor shaft extending parallel to the axis of rotation;
- a rotor body mounted on the rotor shaft and having a plurality of teeth protruding radially;
- at least one field coil wound around the plurality of teeth, said field coil forming coil ends at axial ends of the teeth;
- at least one cover mounted on the rotor shaft and configured to cover the coil ends.

The rotor is characterized in that said cover comprises a plurality of holes configured to each receive a solid balancing element which provides an additional mass to the rotor in order to balance said rotor.

The invention enables a positive balancing of the rotor by adding balancing elements. It is thus possible to correct the position of the center of gravity and to decrease the imbalance and consequently the resulting radial forces that could lead to vibrations.

Thanks to the invention, there is no need for milling or drilling process (negative balancing) that generates flakes. The components will not be contaminated by such flakes. Further advantage is that the cover will not be weakened due to the negative balancing method. The adding of material (balancing element) is a cleaner process and can be automatized.

According to an aspect of the invention, the cover is an endplate of the rotor.

According to an aspect of the invention, the holes are blind holes.

According to an aspect of the invention, the holes have an axis parallel to the axis of rotation.

According to an aspect of the invention, the holes are located on a geometrical line which is a circle centered on the axis of rotation.

According to an aspect of the invention, the holes are located on two concentric circles centered on the axis of rotation and having different diameters. More concentric circles of holes can be applied if needed.

According to an aspect of the invention, the holes are located on the respective circle with a constant pitch between the holes.

According to an aspect of the invention, the cover has a planar wall transverse, in particular perpendicular, to the axis of rotation, and an external circumferential skirt connected to the planar wall at a peripheral region of the planar wall.

According to an aspect of the invention, at least some of the holes, in particular arranged on a circle, are formed through the planar wall in the peripheral region so that the holes extend from the planar wall towards the external skirt.

According to an aspect of the invention, the cover has a hub to be mounted on the rotor shaft.

According to an aspect of the invention, at least some of the holes, in particular arranged on a circle, are formed on a transverse wall of the hub, said transverse wall being transverse, in particular perpendicular, to the axis of rotation.

According to an aspect of the invention, the cover comprises:
- a first portion including said holes formed on said transverse wall of the hub;
- a second portion peripheral to said first portion, said second portion including at least a part of said planar wall;
- a third portion peripheral to said second portion including said holes extending from the planar wall towards the external skirt;
the thickness of said cover in the first and third portions being higher than the thickness of the cover in the second portion.

The thickness is measured parallel to the axis of rotation. Specifically, said second portion is free from any holes configured to receive a solid balancing element.

According to an aspect of the invention, the balancing holes are formed only in the first and third portions, and no hole is provided in the second portion.

According to an aspect of the invention, the holes are formed on regions of the cover with sufficient depth so that the presence of the holes does not cause mechanical weaknesses on the cover. This sufficient depth also enables to have blind holes.

According to an aspect of the invention, the holes belong to at least a first group of holes and a second group of holes, the holes of each group having the same diameters and the hole diameter of the first group being different from the hole diameter of the second group of holes.

According to an aspect of the invention, the holes of the first group and the second group are located on the same circle, in particular holes of respective first and second group being arranged in an alternated manner.

According to an aspect of the invention, the holes of the first group and the second group are located respectively on two different circles of different diameters.

According to an aspect of the invention, the total number of holes on the cover for receiving solid balancing elements is higher than 10, or higher than 20.

For instance, the total number can be in the range 40 to 80.

According to an aspect of the invention, the outer circle on the peripheral region of the cover has identical holes and the inner circle on the transverse wall of the hub has holes of two different diameters.

According to an aspect of the invention, the number of holes on the inner circle is higher than the number of holes in the outer circle. The contrary can be applied.

According to an aspect of the invention, the diameter of each hole is smaller than 20%, in particular 10% or 5%, of the diameter of the cover.

According to an aspect of the invention, the diameter of each hole is in the range 1 mm to 10 mm.

In case different solid balancing elements are present on the cover, biggest balancing elements are able to add a higher mass due to the diameter during the balancing process. Smaller balancing elements are able to generate the fine balancing.

The holes can be threaded, or not threaded.

According to an aspect of the invention, the holes are formed on the cover during the manufacturing of the cover, for instance during a die cast process to manufacture the cover.

According to an aspect of the invention, the cover is made of aluminum.

According to an aspect of the invention, the rotor is balanced by the presence of at least one solid balancing element inserted in one of the holes.

According to an aspect of the invention, a plurality of solid balancing elements are inserted in a plurality of holes.

In some rare cases, the rotor may not need any solid balancing element to balance the rotor.

According to an aspect of the invention, the solid balancing element comprises one of the following elements: a cylindrical pin to be pressed in the hole, a dowel pin to be pressed in the hole, a grub screw to be screwed in a threaded hole, a self-cutting grub screw to be inserted in a non-threaded hole.

According to an aspect of the invention, the solid balancing element is made of steel or aluminum.

According to an aspect of the invention, the solid balancing elements may have different lengths and thus masses.

The invention also relates to a method for balancing a rotor for a rotary electric machine, the rotor having an axis of rotation and comprising:
- a rotor shaft extending parallel to the axis of rotation;
- a rotor body mounted on the rotor shaft and having a plurality of teeth protruding radially;
- at least one field coil wound around the plurality of teeth, said field coil forming coil ends at axial ends of the teeth;
- at least one cover, or endplate, mounted on the rotor shaft and configured to cover the coil ends, said cover comprising a plurality of holes configured to each receive a solid balancing element which provides an additional mass to the rotor in order to balance said rotor;
the method comprising the following step:
- balancing the rotor by inserting one or a plurality of solid balancing elements in the holes of the cover.

The invention also relates to a rotary electric machine for an electric or a hybrid vehicle, comprising a rotor as defined above. The rotary electric machine in particular comprises a stator, the stator surrounding coaxially the rotor.

The invention also relates to an electric drive system comprising the rotary electric machine as defined above and an inverter configured to convert a direct current voltage coming from a high-voltage power supply battery into an alternating current voltage so as to drive the rotary electric machine. The AC voltage may be a multiphase AC voltage, especially a three-phase voltage.

The invention also relates to an electric or a hybrid vehicle, comprising the electric drive system for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of an automotive electric or hybrid vehicle comprising a rotary electric machine according to an embodiment of the invention;
Figure 2 is a schematic diagram of a rotor and a stator of the rotary electric machine of Figure 1;
Figure 3 is a schematic diagram in perspective of the rotor of Figure 2;
Figure 4 is a schematic diagram of a partial cut view of the rotor of Figure 3.

### DETAILED DESCRIPTION

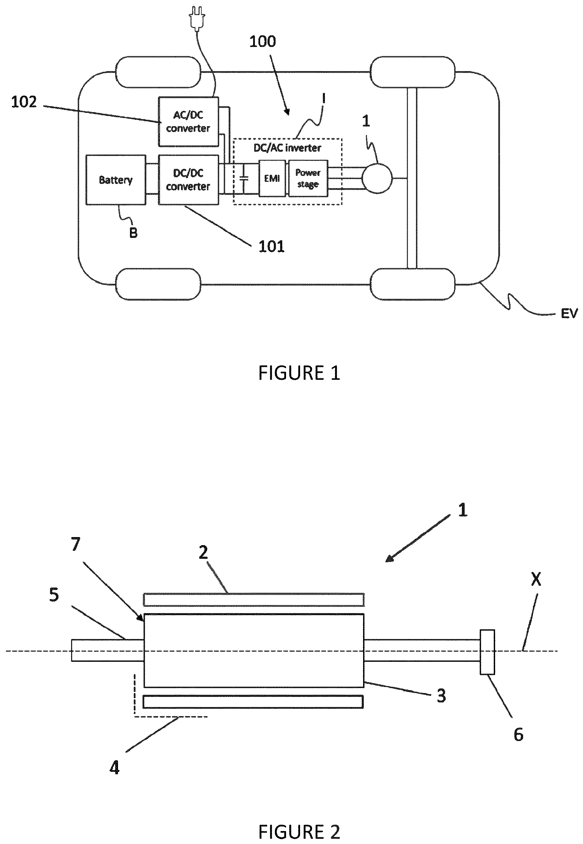

Figure 1 represents schematically an electric vehicle or a hybrid electric automotive vehicle EV comprising wheels and an electric drive system 100 configured to drive at least indirectly at least one of the wheels of the vehicle. The vehicle may comprise a high-voltage power supply battery B, preferably a rechargeable battery, for providing electric power to the electric drive.

The electric drive system 100 comprises a rotary electric machine 1 and an inverter I configured to convert a direct current (DC) voltage coming from the high-voltage power supply battery B into an alternating current (AC) voltage in order to drive the rotary electric machine 1. The rotary electric machine 1 may in particular be a three-phase rotary electric machine supplied with a three-phase AC voltage. A DC/DC converter 101 is provided between the battery B and the inverter I. An AC/DC converter 102 is provided between a network power supply and the inverter I in a known manner.

As illustrated in Figure 2, the rotary electric machine 1 comprises a stator 2, referring to the fixed part of the rotary electric machine, and a rotor 3, referring to the rotating part of the rotary electric machine. The stator 2 presents an annular shape and surrounds coaxially the rotor 3. The rotary electric machine 1 comprises a casing 4 covering the stator 2 and the rotor 3. In a known manner, the stator 2 comprises a stator body formed of a stack of laminations having a plurality of stator teeth projecting radially, and stator windings wound around the stator teeth.

The rotor 3 is a separately excited rotor, also commonly referred as a wound rotor or a slip ring rotor. In this type of rotor, the rotor comprises field coils 10 connected to an external power supply through slip rings 6. The slip rings 6 correspond to electro-mechanical devices configured to allow the exchange of electric power between the field coils and the external power supply.

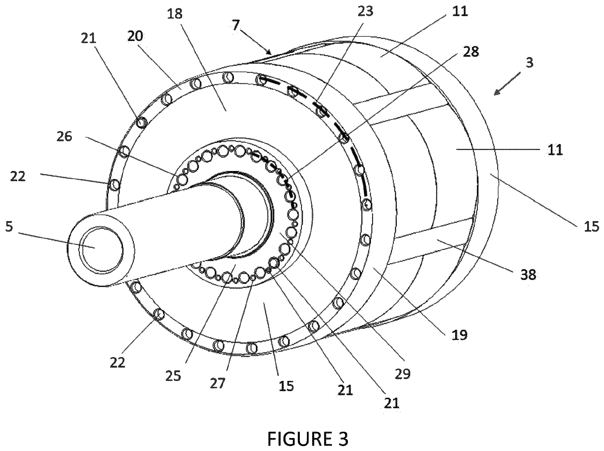

As illustrated in Figure 3, the rotor 1 comprises the rotor shaft 5 configured to rotate around the axis X of rotation, and a rotor body 7 being configured to be mounted on the rotor shaft 5. The shaft 5 is made of steel.

The rotor body 7 has a plurality of teeth 11 protruding radially.

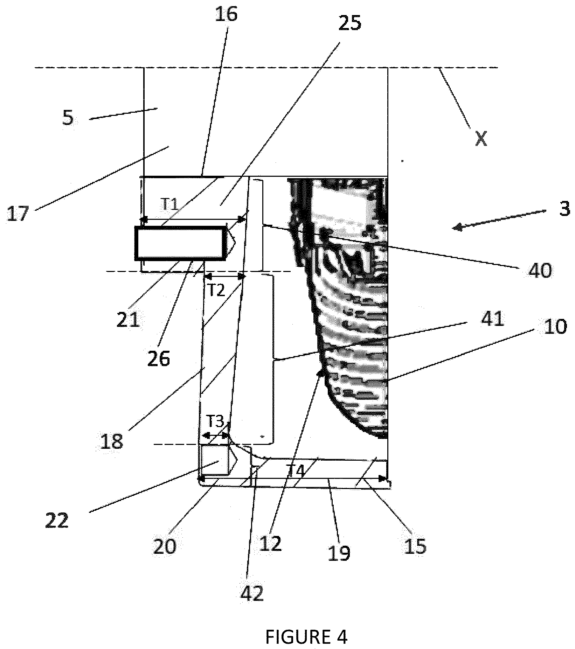

As visible on Figure 4, field coils 10 are wound around the plurality of teeth 11, said field coils 10 forming coil ends 12 at axial ends of the teeth 11.

Longitudinal inserts 38 are mounted between consecutive teeth 11.

Two covers 15 are mounted on the rotor shaft 5 and configured to cover the coil ends 12 on both axial ends of the rotor body 7. Only one cover 15 is visible on Figure 4. The other cover 15 is similar to the one shown on Figure 4.

Each cover 15 has a mounting opening 16 receiving a portion 17 of the rotor shaft 5 so that the cover 15 and the portion 17 of the rotor shaft exert reciprocal radial force on each other to ensure the fixation. The covers 15 are made of aluminum.

The cover 15 has a planar wall 18 perpendicular to the axis of rotation X, and an external circumferential skirt 19 connected to the planar wall 18 at a peripheral region 20 of the planar wall 18.

Each cover 15 comprises a plurality of blind holes configured to each receive a solid balancing element 21 which provides an additional mass to the rotor 3 in order to balance said rotor 3.

Some holes 22 are arranged on an outer circle 23 in the peripheral region 20 so that the holes 22 extend through the planar wall 18 towards the external skirt 19.

The cover 15 has a hub 25 to be mounted on the rotor shaft 5.

Some holes 26 and 27 are arranged on an inner circle 28 on a transverse wall 29 of the hub 25, said transverse wall 29 being perpendicular to the axis of rotation X.

The concentric circles 23 and 28 are centered on the axis of rotation X and have different diameters.

The holes 22, 26 and 27 are located on the respective circle 23 and 28 with a constant pitch between the holes.

The holes 22, 26 and 27 are formed on regions of the cover 15 with sufficient depth so that the presence of the holes does not cause mechanical weaknesses on the cover.

The cover 15 comprises:
- a first portion 40 including the holes 26, 27 formed on the transverse wall 29 of the hub 25;
- a second portion 41 peripheral to said first portion, said second portion including at least a part of said planar wall 18;
- a third portion 42 peripheral to said second portion including the holes 22 extending from the planar wall 18 towards the external circumferential skirt 19.

As shown in Figure 4, the thickness T1 of said cover 15 in the first portion 40 and the thickness T4 of the third portion 42 are higher than the thickness T3, T4 of the cover 15 in the second portion 41. Specifically, the second portion 41 is free from any holes configured to receive a solid balancing element. The second portion 41 has therefore a reduced thickness in order to reduce the dimension of the cover, and thereby the dimension of the rotor. Still, some thickness is left in the cover at the appropriate locations, specifically in the first 40 and third 42 portions for the holes 22, 26, 27. For example, this second portion 41 has a decreasing thickness from the first portion 40 to the third portion 42. The maximum thickness of the second portion 41 is T2 and its minimum thickness is T3.

In the present embodiment of the invention, T1 is in the range 15 mm to 25 mm, being in particular equal to 18 mm.

T2 is in the range 6 mm to 10 mm, being in particular equal to 8 mm.

T3 is in the range 6 mm to 10 mm, being in particular equal to 5 mm.

T4 is in the range 30 mm to 40 mm, being in particular equal to 32 mm.

The holes 26 and 27 belong to a first group of holes 26 and a second group of holes 27, the holes of each group having the same diameters and the hole diameter of the first group 26 being greater from the hole diameter of the second group of holes 27.

The holes 26 and 27 of respective first group and second group are arranged in an alternated manner.

The holes 22, 26 and 27 have three different diameters. The outer circle 23 on the peripheral region of the cover 15 has identical holes and the inner circle 28 on the transverse wall of the hub has holes 26 and 27 of two different diameters.

The holes 22, 26 and 27 have an axis parallel to the axis of rotation X.

The total number of holes 22, 26 and 27 on the cover for receiving solid balancing elements is higher than 10, or higher than 20.

The number of holes 26 and 27 on the inner circle 28 is higher than the number of holes 22 in the outer circle 23.

For instance, the outer circle 23 has 24 holes. The inner circle 28 has 22 small holes 27 and 22 big holes 26.

For instance, the hole diameter on the outer circle is 5 mm.

For instance, the hole diameter of the small holes 27 on the inner circle is 2 mm.

For instance, the hole diameter of the big holes 26 on the inner circle is 5 mm.

In case different solid balancing elements are present on the cover, biggest balancing elements 21 are able to add a higher mass due to the diameter during the balancing process. Smaller balancing elements are able to generate the fine balancing.

The holes 22, 26 and 27 can be threaded or not threaded.

The holes 22, 26 and 27 are formed on the cover 15 in aluminum, during the manufacturing of the cover, for instance during a die cast process to manufacture the cover.

The rotor 3 is balanced by the presence of at least one solid balancing element 21 inserted in one of the holes 22, 26 and 27.

In the embodiment of figure 3, three solid balancing elements 21 are inserted in three holes 22, 26 and 27.

In some are cases, the rotor 3 may not need any solid balancing element to balance the rotor.

Each solid balancing element 21 comprises one of the following elements: a cylindrical pin to be pressed in the hole, a dowel pin to be pressed in the hole, a grub screw to be screwed in the threaded hole, a self-cutting grub screw to be inserted in the hole.

Each solid balancing element 21 is made of steel.

The solid balancing elements 21 may have different lengths and thus masses.

The balancing of the rotor 3 is made by inserting one or a plurality of solid balancing elements 21 in the holes 22, 26 and 27 of the cover.

## Claims

1. A rotor (3) for a rotary electric machine (1), the rotor (3) having an axis (X) of rotation and comprising:
- a rotor shaft (5) extending parallel to the axis of rotation (X);
- a rotor body (7) mounted on the rotor shaft (5) and having a plurality of teeth (11) protruding radially;
- at least one field coil (10) wound around the plurality of teeth, said field coil forming coil ends (12) at axial ends of the teeth;
- at least one cover (15) mounted on the rotor shaft and configured to cover the coil ends;
**characterized in that** said cover comprises a plurality of holes (22, 26, 27) configured to each receive a solid balancing element (21) which provides an additional mass to the rotor in order to balance said rotor (3).

2. The rotor (3) as claimed in the preceding claim, wherein the holes are blind holes (22, 26, 27).

3. The rotor (3) as claimed in any of the preceding claims, wherein the holes (22, 26, 27) are located on a geometrical line which is a circle (23; 28) centered on the axis of rotation (X).

4. The rotor (3) as claimed in the preceding claim, wherein the holes are located on two concentric circles (23, 28) centered on the axis of rotation and having different diameters.

5. The rotor (3) as claimed in any of the preceding claims, wherein the cover (15) has a planar wall (18) transverse, in particular perpendicular, to the axis of rotation, and an external circumferential skirt connected to the planar wall at a peripheral region of the planar wall, and at least some of the holes (22), in particular arranged on a circle, are formed through the planar wall in the peripheral region so that the holes extend from the planar wall towards the external skirt (19).

6. The rotor (3) as claimed in any of the preceding claims, wherein the cover has a hub (25) to be mounted on the rotor shaft (5) and at least some of the holes (26, 27), in particular arranged on a circle (28), are formed on a transverse wall (29) of the hub, said transverse wall being transverse, in particular perpendicular, to the axis of rotation.

7. The rotor (3) according to claims 5 and 6, wherein the cover (15) comprises:
- a first portion (40) said holes (26, 27) formed on said transverse wall (29) of the hub;
- a second portion (41) peripheral to said first portion, said second portion including at least a part of said planar wall (18);
- a third portion (42) peripheral to said second portion including said holes (22) extending from the planar wall towards the external skirt (19);
the thickness (T1; T4) of said cover (15) in the first and third portions being higher than the thickness (T3) of the cover in the second portion.

8. The rotor (3) as claimed in any of the preceding claims, wherein the holes (22, 26, 27) belong to at least a first group of holes and a second group of holes, the holes of each group having the same diameters and the hole diameter of the first group being different from the hole diameter of the second group of holes.

9. The rotor (3) as claimed in the preceding claim, wherein the holes (26, 27) of the first group and the second group are located on the same circle, in particular holes of respective first and second group being arranged in an alternated manner.

10. The rotor (3) as claimed in any of the preceding claims, wherein the total number of holes (22, 26, 27) on the cover for receiving solid balancing elements is higher than 10, or higher than 20.

11. The rotor (3) as claimed in any of the preceding claims, wherein the holes are formed on the cover (15) during the manufacturing of the cover, for instance during a die cast process to manufacture the cover.

12. The rotor (3) as claimed in any of the preceding claims, wherein the solid balancing element (21) comprises one of the following elements: a cylindrical pin to be pressed in the hole, a dowel pin to be pressed in the hole, a grub screw to be screwed in the threaded hole, a self-cutting grub screw to be inserted in the hole.

13. A method for balancing a rotor (3) for a rotary electric machine (1), the rotor (3) having an axis (X) of rotation and comprising:
- a rotor shaft (5) extending parallel to the axis of rotation (X);
- a rotor body (7) mounted on the rotor shaft (5) and having a plurality of teeth (11) protruding radially;
- at least one field coil (10) wound around the plurality of teeth, said field coil forming coil ends (12) at axial ends of the teeth;
- at least one cover (15) mounted on the rotor shaft and configured to cover the coil ends, said cover comprising a plurality of holes configured to each receive a solid balancing element which provides an additional mass to the rotor in order to balance said rotor;
the method comprising the following step:
- balancing the rotor by inserting one or a plurality of solid balancing elements (21) in the holes (22, 26, 27) of the cover.
